# EUROPÄISCHE PATENTSCHRIFT

(11) **EP 0 382 801 B1**
(45) Veröffentlichungstag und Bekanntmachung des Hinweises auf die Patenterteilung: **09.03.1994**
(21) Anmeldenummer: 89904540.5
(22) Anmeldetag: 08.04.1989
(51) Int. Cl.: B32B 5/22, B32B 27/12, D06N 3/12

(54) **LAMINATE AUS TEXTILEN FLÄCHENGEBILDEN UND ATMUNGSAKTIVEN FOLIEN**
LAMINATES COMPOSED OF LAYERS OF NON-WOVEN TEXTILES AND AIR-PERMEABLE FILMS
STRATIFIES EN COUCHES TEXTILES NON TISSEES ET EN PELLICULES PERMEABLES A L'AIR

(30) Priorität: 07.05.1988 DE 3815634
(43) Veröffentlichungstag der Anmeldung: 22.08.1990
(73) Patentinhaber: Akzo Nobel N.V., 6824 BM Arnhem (NL)
(72) Erfinder: MÄHLER, Rolf-Dirk, D-5600 Wuppertal 11 (DE)
(74) Vertreter: Schalkwijk, Pieter Cornelis
(86) Internationale Anmeldenummer: EP8900379
(87) Internationale Veröffentlichungsnummer: WO8910838

(56) Entgegenhaltungen:
- EP-A- 0 110 627
- EP-A- 0 111 360
- FR-A- 2 522 587

## Beschreibung

Die Erfindung betrifft ein Laminat aus einem Gewebe oder Gewirke und einer wasserundurchlässigen wasserdampfdurchlässigen Folie.

Sie betrifft ferner die Verwendung solcher Laminate als Ausgangsmaterial für die Zwischenschicht in Schuhen oder Handschuhen.

Es ist bekannt, bei der Herstellung von Schuhen oder Handschuhen atmungsaktive Folien zu verwenden. Diese Folien besitzen die Aufgabe, ein angenehmes Tragegefühl zu vermitteln, indem sie einerseits den Transport von Wasserdampf ermöglichen, so daß Körperflüssigkeit wie Schweiß nach Verdunsten von der Haut durch die Folie hindurch an die Umgebung abgegeben werden kann. Andererseits sollen diese Folien undurchlässig gegen flüssiges Wasser sein, so daß beispielsweise Regen nicht durch den Schuh oder Handschuh hindurch auf die Haut gelangen kann. Mit anderen Worten, solche atmungsaktiven Folien müssen wasserundurchlässig, aber wasserdampfdurchlässig sein. Sie können dann als Zwischenlage für Schuhe oder Handschuhe verwendet werden, welche außerdem eine Außenlage und eine Innenlage besitzen, die jeweils z.B. aus Leder oder einem textilen Flächengebilde bestehen können. Folien dieser Art und Schuhe bzw. Handschuhe, die solche Folien enthalten, sind z.B. beschrieben in DE-A-27 37 756, DE-A-31 47 202, US-A-4,520,056, US-A-4,545,841 und US-A-4,679,257.

Die Nachteile der Verwendung solcher Folien als solche liegen unter anderem darin, daß sie wegen der Handhabbarkeit und der erforderlichen mechanischen Festigkeit eine gewisse Mindestdicke aufweisen müssen. Sehr dünne Folien können nicht verwendet werden, da die Dehn- und Scheuerbeanspruchung in Schuhen oder Handschuhen eine gewisse mechanische Festigkeit erfordert, die erst bei bestimmten Mindestdicken erreicht wird. Die Verwendung von Folien einer bestimmten Mindestdicke verteuert andererseits den Artikel, da die atmungsaktiven Folien einen nicht zu vernachlässigenden Kostenfaktor im Endartikel darstellen.

Ferner wird durch höhere Foliendicken der Transport von Wasserdampf an die Umgebung verlangsamt.

Es wurde versucht, die genannten Nachteile dadurch zu umgehen, daß man Laminate aus atmungsaktiver Folie und nichtgewebten textilen Flächengebilden, wie z.B. thermisch gebundenen Vliesen einsetzte. Dies ist beispielsweise beschrieben in US-A-3,510,344, US-A-3,713,938 und US-A-4,594,283. Die Nachteile der Verwendung solcher Laminate für die Herstellung von Schuhen oder Handschuhen bestehen darin, daß die nichtgewebten Flächengebilde wie z.B. Vliese nur niedrige Dehnbarkeit besitzen und deshalb die Laminate nicht einstückig mit der Außenlage von Schuhen verbunden und geformt werden können. Das Problem hierbei ist das gleiche, wie es im Fall von Laminaten auftritt, welche Flächengebilde aus vollverstreckten Fäden enthalten und das nunmehr im einzelnen beschrieben wird.
Es wurden bereits auch Laminate aus atmungsaktiven Folien und textilen Geweben und Gewirken eingesetzt. Dies geht u.a. hervor aus EP-A-0 110 627, GB-A-2 114 585, US-A-4,599,810, DE-A-27 37 756, DE-A-31 49 878. In all diesen Fällen bestanden die Gewebe oder Gewirke aus vollverstreckten synthetischen Garnen bzw. Endlosfäden. Der Nachteil dieser Laminate besteht in ihrer verhältnismäßig niedrigen Dehnbarkeit. Diese wirkt sich nachteilig auf den Herstellungsprozeß bei der Schuh- oder Handschuhfertigung aus. Da diese Laminate nur geringe Dehnbarkeit in Längs- und Querrichtung aufweisen, müssen sie zu einzelnen Stücken zugeschnitten werden und mit passenden Stücken der Innenlage verbunden werden. Anschließend werden diese Stücke miteinander vernäht und das Ganze mit der vorgefertigten geformten einstückigen Außenlage verbunden, z.B. über Kleben. Hierdurch wird einerseits die Schuh- bzw. Handschuhherstellung aufwendig, andererseits bilden die Nähte, mit denen die einzelnen Teile aus Laminat und Innenlage verbunden sind, Schwachstellen im Endartikel, durch die Wasser eindringen kann. Vielfach ist es daher nötig, diese Nähte, z.B. durch Versiegelung bzw. Nahtabdichtbänder, abzudichten.

Aufgabe der vorliegenden Erfindung war es daher, die genannten Nachteile bekannter Laminate zu vermeiden und Laminate zur Verfügung zu stellen, welche mit Außenlagen von Schuhen oder Handschuhen einstückig zusammen geformt und verbunden werden können, d. h. ohne daß einzelne vorgefertigte Laminatteile an den Rändern miteinander vernäht werden müssen.

Die Aufgabe wurde gelöst durch Laminate gemäß Oberbegriff von Anspruch 1, die dadurch gekennzeichnet sind, daß das Gewebe oder Gewirke aus unverstreckten oder teilverstreckten Endlosfäden besteht, daß das Laminat bei Raumtemperatur eine Dehnbarkeit in Längs- und in Querrichtung von mindestens 150% besitzt und daß es nach einer Verdehnung in Längs- und/oder Querrichtung um einen Wert zwischen 150% und der Bruchdehnung die erhaltene Form im wesentlichen beibehält. Die Dehnbarkeit bzw. Dehnung wird hierbei bestimmt nach DIN 53 857.

Die erfindungsgemäßen Laminate weisen gegenüber bekannten den Vorteil auf, daß sie einstückig zusammen mit der Außenlage von Schuhen oder Handschuhen, welche aus Leder oder einem textilen Flächengebilde bestehen kann, geformt und verbunden werden können. Hierzu kann die Außenlage auf das erfindungsgemäße Laminat gelegt und das entstandene Flächengebilde, z.B. über einen Leisten, geformt werden. Die Verbindung von Laminat und Außenlage kann zusammen mit der Formgebung oder in einem separaten Schritt erfolgen, z.B. über vollflächiges Verkleben mittels einer Klebstoffzwischenschicht. Vorzugsweise erfolgt die Verbindung jedoch nur punktweise über einzelne aktivierbare sogenannte Klebepunkte, was unten näher erläutert wird. Die Verbindung zwischen Außenlage und Laminat kann dann in vorteilhafter Weise zusammen mit der Formgebung dadurch erfolgen, daß man den formgebenden Leisten beheizt und so die Klebepunkte aktiviert. Nach Vorliegen des geformten Gebildes aus Außenlage und erfindungsgemäßem Laminat wird die Innenlage, welche im Schuh oder Handschuh dem Fuß bzw. der Hand zugewandt ist, in üblicher Weise in einzelnen zugeschnittenen Stücken aufgebracht und mit dem einstückigen Gebilde aus Außenlage und Laminat verbunden, z.B. durch Verklebung bzw. Vernähen an den Außenrändern.
Die Möglichkeit, die erfindungsgemäßen Laminate einstückig zusammen mit der Außenlage zu formen und zu verbinden, ergibt sich aus der hohen Dehnbarkeit, welche eine Voraussetzung für die Formgebung, z.B. über Leisten, ist. Diese hohe Dehnbarkeit wird durch die Verwendung von unverstreckten oder teilverstreckten Endlosfäden im Gewebe- bzw. Gewirkeanteil des Laminats verursacht. Der Vorteil dieser Formgebung unter Verwendung eines einstückigen Laminats liegt darin, daß die atmungsaktive Folie im Schuh bzw. Handschuh einstückig vorliegt, d.h. daß keine Nähte zwischen einzelnen vorgefertigten Laminatteilen vorhanden sind, durch die Wasser eindringen könnte und daß daher auf Nahtabdichtung bzw. -versiegelung verzichtet werden kann.

Für die erfindungsgemäßen Laminate müssen neben Geweben und Gewirken aus unverstreckten oder teilverstreckten Endlosfäden atmungsaktive Folien verwendet werden, die ihrerseits ebenfalls eine Dehnbarkeit von mindestens 150% in Längs- und in Querrichtung aufweisen und sie müssen wasserundurchlässig, aber wasserdampfdurchlässig sein. Solche Folien sind als solche bekannt, u.a. aus Schriften, welche oben bereits genannt wurden, und aus der EP-A-0 111 360. Unter Folien werden im Zusammenhang mit den erfindungsgemäßen Laminaten flächenhafte, flexible Gebilde verstanden, deren Dicke im Vergleich zu ihrer Länge und Breite sehr gering ist. Solche Artikel werden, wenn sie aus Polymeren bestehen, häufig auch als Filme bezeichnet.

Die Gewebe und Gewirke aus unverstreckten oder teilverstreckten Fäden können durch bekannte Verfahren hergestellt werden, wobei gewährleistet sein muß, daß die Gewebe oder Gewirke eine Dehnbarkeit in Längs- und in Querrichtung von mindestens 150% aufweisen. Dies bedeutet einerseits, daß die verwendeten Fäden eine Längsdehnbarkeit von mindestens 150% aufweisen müssen und daß die Gewebe- bzw. Gewirkeherstellung so durchzuführen ist, daß die Dehnbarkeit nicht unter 150% absinkt. Eine vollständige Weiterverstreckung während der Herstellung des Gewebes oder Gewirkes, z.B. durch hohe Zugkräfte, muß also vermieden werden. Der Ausdruck "teilverstreckte" Fäden im Zusammenhang mit den erfindungsgemäßen Laminaten bedeutet also, daß eine gewisse Verstreckung bei der Fadenherstellung und/oder der Herstellung des Gewebes bzw. Gewirkes erfolgen darf, jedoch nur in einem Ausmaß, daß die Dehnbarkeit des Flächengebildes nicht unter 150% sinkt. Das Ausmaß der Verstreckung, welches zulässig ist, hängt hierbei unter anderem vom Fadenmaterial ab und kann den textilen Daten der vorgesehenen Endlosfäden entnommen werden, z.B. der Kraft-Dehnungskurve.

Als unverstreckte oder teilverstreckte Fäden im Sinne der Erfindung können auch sogenannte vororientierte (FOY, POY) oder teilweise vororientierte (MOY) Fäden verwendet werden, welche mit hoher Geschwindigkeit, z.B. mit etwa 2000 m/min bis 8000 m/min gesponnen wurden, sofern sie die erforderlichen Dehnungseigenschaften aufweisen bzw. die Herstellung von Laminaten ermöglichen, welche die in Anspruch 1 genannten Dehnungseigenschaften besitzen.

Die Verbindung zwischen Folie und Gewebe bzw. Gewirke in den erfindungsgemäßen Laminaten kann erfolgen durch punktförmige oder flächenhafte Verklebung. Die hierfür ausgewählten Klebstoffe müssen vor allem im Fall flächenhafter Verklebung hydrophil sein, um den Transport von Wasserdampf nicht zu behindern, und sie dürfen die Dehnbarkeit der Laminate nicht unter einen Wert von 150% herabsetzen. Geeignet sind hydrophile geschäumte Kleber auf Polyurethan- oder Acrylatbasis.

Die hohe Dehnbarkeit der erfindungsgemäßen Laminate reicht allein nicht aus, um die Anwendungsvorteile zu erzielen. Vielmehr muß die nach Verdehnung um 150% bis hin zur Bruchdehnung erhaltene Form, d.h. die Länge und Breite des Laminats, im wesentlichen erhalten bleiben, sobald die zur Dehnung angewandte Kraft nicht mehr einwirkt. Andernfalls käme es durch Rückstellkräfte zu Spannungen im Gebilde aus Außenlage und Laminat. Für die erfindungsgemäßen Laminate können also keine elastischen ("stretch") Fäden verwendet werden, welche zwar hohe Dehnbarkeit aufweisen, die aber, sobald keine Dehnkraft mehr einwirkt, die Ausgangslänge wieder einnehmen. Die Aussage, daß die erhaltene Form "im wesentlichen" beibehalten werden muß, bedeutet, daß keine Verkürzung der Länge und Breite von mehr als etwa 10% eintreten darf, sobald die Dehnkraft nicht mehr einwirkt. Natürlich behalten die erfindungsgemäßen Laminate die nach Verdehnung erhaltene Form auch dann im wesentlichen bei, wenn die Verdehnung unter 150% liegt.
In einer vorteilhaften Ausführungsform weisen die erfindungsgemäßen Laminate eine Dehnbarkeit in Längs- und in Querrichtung von 250 bis 400% auf. Speziell im Fall der Herstellung von Handschuhen ist häufig eine höhere Dehnbarkeit als 150% erforderlich.

Die Folie in den erfindungsgemäßen Laminaten kann relativ dünn sein, da die zusätzliche Verwendung von Gewebe oder Gewirke zur mechanischen Festigkeit beiträgt. Die Verwendung dünner Folien bewirkt, daß Wasserdampf schneller von der Haut des Trägers an die Umgebung abgegeben werden kann. Vorzugsweise ist die Folie zwischen 5 und 50 µm, insbesondere zwischen 10 und 25 µm dick.

Für die Endlosfäden, aus denen das Gewebe oder Gewirke der erfindungsgemäßen Laminate besteht, lassen sich im Prinzip beliebige Materialien verwenden, welche zu den erforderlichen Dehnungseigenschaften führen. Vorzugsweise werden hierfür synthetische organische Polymere verwendet, insbesondere Polyester wie Polyäthylenterephthalat oder Polybutylenterephthalat, Polyamid 6 oder 66, Copolyamide, oder Polyolefine wie Polypropylen.

Das Material, aus dem die atmungsaktive Folie besteht, kann ebenfalls aus einer Reihe bekannter Materialien ausgewählt werden, wie sie in den eingangs genannten Druckschriften beschrieben sind. Voraussetzung ist hier wiederum, daß die genannten Dehnungs- und Rückstelleigenschaften erreicht werden. Bevorzugt für das Folienmaterial sind Polyurethane Polyolefine und Copolyätherester. Besonders günstige Eigenschaften werden durch die Verwendung eines Copolyesters erzielt, der aus einer Vielzahl von wiederkehrenden intralinearen langkettigen Estereinheiten und kurzkettigen Estereinheiten besteht, die statistisch Kopfende-an-Hinterende durch Esterbrücken verbunden sind, wobei die langkettigen Estereinheiten der Formel 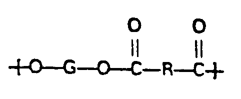
wobei die kurzkettigen Estereinheiten der Formel 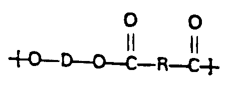
entsprechen, worin G ein zweiwertiger Rest ist, der durch Entfernung von endständigen Hydroxylgruppen mindestens eines langkettigen Glycols entsteht, das ein Molekulargewicht im Bereich von 800 bis 6000 und ein Atomverhältnis von Kohlenstoff zu Sauerstoff im Bereich von 2,0 bis 4,3 besitzt, wobei mindestens 70 Gew.% des langkettigen Glycols ein Kohlenstoff:Sauerstoff-Verhältnis im Bereich von 2,0 bis 2,4 aufweisen, R ein zweiwertiger Rest ist, der durch Entfernung von Carboxylgruppen mindestens einer Dicarbonsäure mit einem Molekulargewicht von weniger als 300 entsteht, und D ein zweiwertiger Rest ist, welcher durch Entfernung von Hydroxylgruppen mindestens eines Diols entsteht, das ein Molekulargewicht von weniger als 250 besitzt, wobei mindestens 80 Mol% der verwendeten Dicarbonsäure aus Terephthalsäure oder einem esterbildenden Äquivalent hiervon und mindestens 80 Mol% des niedermolekularen Diols aus 1,4-Butandiol oder einem esterbildenden Äquivalent hiervon bestehen, wobei die Summe der Molprozente der Dicarbonsäure, die nicht Terephthalsäure oder deren esterbildendes Äquivalent ist, und des niedermolekularen Diols, das nicht, 1,4-Butandiol oder dessen esterbildendes Äquivalent ist, nicht größer als 20 ist und die kurzkettigen Estereinheiten 50 bis 75 Gew.-% des Copolyätheresters bilden.

Solche Copolyätherester und die Herstellung von Folien aus ihnen sind in der EP-A-0 111 360 beschrieben. Die Herstellung der Folien kann beispielsweise nach den Angaben in Kirk-Othmer, Encyclopedia of Chemical Technology 9 (1966), Seiten 232-241 erfolgen. Die in der EP-A-0 111 360 genannten speziellen Vertreter der Copolyätherester sind auch für die erfindungsgemäßen Laminate verwendbar.

Die Überprüfung, ob eine atmungsaktive Folie für die erfindungsgemäßen Laminate geeignet ist, d.h. ob sie in ausreichendem Maß wasserundurchlässig und wasserdampfdurchlässig ist, kann nach den Angaben in DIN 53 495, ASTM E 96-66 (Methode B) und nach den Angaben in der GB-A-2 024 100 erfolgen.

Nach DIN 53 495 wird die Wasserabsorption bei 23^{o}C gemessen, nach ASTM E 96-66 (Methode B) die Wasserdampfdurchlässigkeit bei 30^{o}C und 50% relativer Luftfeuchtigkeit. Die wasserabweisenden Eigenschaften werden gemäß den Angaben der GB-A-2 024 100 mit einer modifizierten Sutter-Test-Apparatur und nach dem "Mullin-Burst-Test" gemessen. Gut geeignet für die erfindungsgemäßen Laminate sind Folien, die eine Wasserdampfdurchlässigkeit von mindestens 1000, vorzugsweise mindestens 2000 g/m² . Tag und eine Wasserabsorption von nicht mehr als 17 Gew.-%, vorzugsweise von nicht mehr als 11 Gew.-% aufweisen.

In einer bevorzugten Ausführungsform der erfindungsgemäßen Laminate weisen diese auf der dem Gewebe oder Gewirke abgewandten Oberfläche der Folie thermisch aktivierbare Klebepunkte aus einem organischen Polymeren auf. Diese Klebepunkte dienen dazu, eine punktförmige Verbindung zwischen den Laminaten und einer weiteren Schicht, z.B. der Außenlage von Schuhen oder Handschuhen, zu ermöglichen. Eine punktförmige Verklebung ist hierbei einer vollflächigen Verklebung vorzuziehen. Die Klebepunkte aus einem organischen Polymeren sind thermisch aktivierbar, d.h. sie können bei erhöhter Temperatur, vorzugsweise im Bereich von 100 bis 180^{o}C, erweichen. Beim Wiedererkalten erstarren die Klebepunkte und schaffen so eine Klebeverbindung zwischen Laminat und Schuh- oder Handschuhaußenlage. Gegebenenfalls kann die Verklebung bei erhöhter Temperatur durch Anwendung eines leichten bis mittleren Anpreßdrucks unterstützt werden. Geeignet als Material für die Klebepunkte sind organische Polymere mit niedrigem Erweichungspunkt, z.B. im Bereich von 100 bis 180^{o}C. Solche thermoplastische Polymere als solche sind bekannt, typische Vertreter sind Copolyester oder Copolyamide. Die Klebepunkte können nach bekannten Techniken auf die Folienseite der erfindungsgemäßen Laminate aufgebracht werden, z.B. durch Siebdruck.

Die erfindungsgemäßen Laminate können in vorteilhafter Weise als Ausgangsmaterial für eine Zwischenschicht für Schuhe oder Handschuhe verwendet werden, welche außerdem eine Außenschicht und eine Innenschicht aufweisen. Aus der Verwendung der Laminate als Ausgangsmaterial für die Zwischenschicht resultieren die oben beschriebenen Vorteile bezüglich Fertigung und Artikeleigenschaften. Vielfach bestehen hierbei die Außenschicht und die Innenschicht der Schuhe oder Handschuhe unabhängig voneinander aus Leder oder einem textilen Flächengebilde, wie z.B. einem Gewebe. Außenlagen aus textilen Flächengebilden kommen beispielsweise bei Turn- oder Sportschuhen in Frage. Innenschichten bzw. Innenlagen aus textilen Flächengebilden können bekannte Futterstoffe sein. In vielen Fällen besteht die Außenlage von Schuhen oder Handschuhen aus Leder wegen dessen Trage- und ästhetischer Eigenschaften.

Bevorzugt wird die Zwischenlage, die aus den erfindungsgemäßen Laminaten hergestellt wird, in den Schuhen oder Handschuhen so angebracht, daß die Folie der Außenlage und das Gewebe oder Gewirke der Innenlage zugewandt ist. Die Innenlage ist hierbei die der Hand oder dem Fuß zugekehrte Seite des Schuhs oder Handschuhs. Wenn die Folie der Außenlage benachbart ist, entsteht eine wirksame Barriere gegen das Eindringen von Wasser, z.B. bei Regen, in das textile Gewebe oder Gewirke des Laminats. In einer vorteilhaften Ausführungsform ist hierbei das erfindungsgemäße Laminat mit der Außenlage punktförmig über die beschriebenen Klebepunkte verbunden und an den Außenrändern vernäht.

In den Zwischenschichten der fertigen Schuhe oder Handschuhe liegen die erfindungsgemäßen Laminate normalerweise nicht in ihrer ursprünglichen Form vor, da bei der Schuh- bzw. Handschuhherstellung in Folge der Formgebung, z.B. über Leisten, eine irreversible Verdehnung auftritt. Die Zwischenschichten der Fertigartikel weisen daher im Normalfall kleinere Werte für die Dehnbarkeit auf als die erfindungsgemäßen Laminate, die als Ausgangsmaterial für die Zwischenschicht dienen.

Die Erfindung wird nachfolgend durch ein Ausführungsbeispiel veranschaulicht. Die hierbei verwendete (handelsübliche) Sympatex ®-Folie besteht aus einem Copolyätherester gemäß Anspruch 6 und wurde nach dem in der EP-A-0 111 360 angegebenen Verfahren hergestellt.

### Ausführungsbeispiel:

### 1. Laminat

Aus Polyester-Filamentgarn MOY 107 dtex f36 gl pr, gesponnen mit 2000 m/min Abzugsgeschwindigkeit wurde eine einschienige Trikotwirkware hergestellt mit der Fadenzahl 11 x 207 und 23 Maschenreihen/cm. Das m²-Gewicht der Wirkware betrug 63 g/m². Sie wurde mit einer SYMPATEX ®-Folie (Membran) der Dicke 25 µm, g/m² unter Verwendung von ca. 10 g/m² entsprechend 31 eines Klebers zu einem Zweilagen-Laminat verarbeitet. Dabei wurde der Kleber (Polyurethan) in Ethylacetat gelöst, punktförmig auf die Membran aufgetragen, das Lösungsmittel bei 40^{o}C abgedampft und die Membran mit Kleberpunkten bei ca. 80^{o}C Walzentemperatur durch Kalandrieren mit der Wirkware vereinigt.

Am Laminat wurden folgende Höchstdehnungen gemessen:
längs zur Warenlaufrichtung 255%
quer zur Warenlaufrichtung 366%.

### 2. Verarbeitung

Das Laminat wurde in einer Tiefziehmaschine (der Fa. Illig) nach dem Vakuumtiefziehverfahren über einen Leisten verformt. Dabei wurde mit einer Unterhitze von 120^{o}C über 10 s gearbeitet. Die Abkühlzeit vor Aufheben des Vakuums betrug ca. 1 min.

Erhalten wurden Formteile entsprechend der Form des Leistens, die sich nach Entfernen überstehenden Materials und Öffnen des oberen Schaftbereiches für die Verwendung als wasserdichte Schuhzwischenschicht eignen.

## Patentansprüche

1. Laminat aus einem Gewebe oder Gewirke und einer wasserundurchlässigen, wasserdampfdurchlässigen Folie, dadurch gekennzeichnet, daß das Gewebe oder Gewirke aus unverstreckten oder teilverstreckten Endlosfäden besteht, daß das Laminat bei Raumtemperatur eine Dehnbarkeit in Längs- und in Querrichtung von mindestens 150% besitzt und daß es nach einer Verdehnung in Längs- und/oder Querrichtung um einen Wert zwischen 150% und der Bruchdehnung die erhaltene Form im wesentlichen beibehält.

2. Laminat nach Anspruch 1, dadurch gekennzeichnet, daß die Dehnbarkeit 250 bis 400% beträgt.

3. Laminat nach Anspruch 1 oder 2, dadurch gekennzeichnet, daß die Endlosfäden aus einem synthetischen organischen Polymermaterial bestehen.

4. Laminat nach Anspruch 3, dadurch gekennzeichnet, daß die Endlosfäden aus Polyester, Polyamid oder Polypropylen bestehen.

5. Laminat nach einem oder mehreren der Ansprüche 1 bis 4, dadurch gekennzeichnet, daß die wasserdampfdurchlässige wasserundurchlässige Folie aus Polyurethan, Polyolefin oder aus einem Copolyätherester besteht.

6. Laminat nach Anspruch 5, dadurch gekennzeichnet, daß die Folie aus einem Copolyätherester besteht, der aus einer Vielzahl von wiederkehrenden intralinearen langkettigen Estereinheiten und kurzkettigen Estereinheiten besteht, die statistisch Kopfende-an-Hinterende durch Esterbrücken verbunden sind, wobei die langkettigen Estereinheiten der Formel 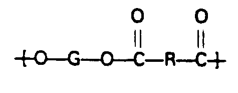 wobei die kurzkettigen Estereinheiten der Formel 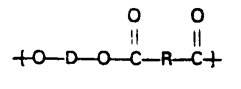 entsprechen, worin G ein zweiwertiger Rest ist, der durch Entfernung von endständigen Hydroxylgruppen mindestens eines langkettigen Glycols entsteht, das ein Molekulargewicht im Bereich von 800 bis 6000 und ein Atomverhältnis von Kohlenstoff zu Sauerstoff im Bereich von 2,0 bis 4,3 besitzt, wobei mindestens 70 Gew.% des langkettigen Glycols ein Kohlenstoff:Sauerstoff-Verhältnis im Bereich von 2,0 bis 2,4 aufweisen, R ein zweiwertiger Rest ist, der durch Entfernung von Carboxylgruppen mindestens einer Dicarbonsäure mit einem Molekulargewicht von weniger als 300 entsteht, und D ein zweiwertiger Rest ist, welcher durch Entfernung von Hydroxylgruppen mindestens eines Diols entsteht, das ein Molekulargewicht von weniger als 250 besitzt, wobei mindestens 80 Mol% der verwendeten Dicarbonsäure aus Terephthalsäure oder einem esterbildenden Äquivalent hiervon und mindestens 80 Mol% des niedermolekularen Diols aus 1,4-Butandiol oder einem esterbildenden Äquivalent hiervon bestehen, wobei die Summe der Molprozente der Dicarbonsäure, die nicht Terephthalsäure oder deren esterbildendes Äquivalent ist, und des niedermolekularen Diols, das nicht, 1,4-Butandiol oder dessen esterbildendes Äquivalent ist, nicht größer als 20 ist und die kurzkettigen Estereinheiten 50 bis 75 Gew.-% des Copolyätheresters bilden.

7. Laminat nach einem oder mehreren der Ansprüche 1 bis 6, dadurch gekennzeichnet, daß die Dicke der Folie einen Wert zwischen 5 und 50 µm besitzt.

8. Laminat nach Anspruch 7, dadurch gekennzeichnet, daß die Dicke der Folie einen Wert zwischen 10 und 25 µm besitzt.

9. Laminat nach einem oder mehreren der Ansprüche 1 bis 8, dadurch gekennzeichnet, daß sich auf der dem Gewebe oder Gewirke abgewandten Oberfläche der Folie thermisch aktivierbare Klebepunkte aus einem organischen Polymeren befinden.

10. Verwendung eines Laminats nach einem oder mehreren der Ansprüche 1 bis 9 zur Herstellung von Schuhen oder Handschuhen, welche eine Außenschicht, eine Zwischenschicht und eine Innenschicht aufweisen, wobei das Laminat als Ausgangsmaterial für die Zwischenschicht dient.

11. Verwendung nach Anspruch 10, dadurch gekennzeichnet, daß die Außen- und Innenschicht unabhängig voneinander aus Leder oder einem textilen Flächengebilde bestehen.

12. Verwendung nach Anspruch 10 oder 11, dadurch gekennzeichnet, daß die Folienseite der Zwischenschicht der Außenlage zugewandt ist.

13. Verwendung nach Anspruch 12, dadurch gekennzeichnet, daß die Zwischenschicht mit der Außenschicht durch thermisch aktivierbare Klebepunkte verbunden ist.

## Claims

1. Laminate consisting of a woven fabric or knitted fabric and a foil impermeable to water and permeable to water vapour, characterised in that the woven fabric or knitted fabric consists of undrawn or partially drawn continuous filaments, that the laminate has an extensibility of at least 150% in the longitudinal and transverse directions at room temperature and that after extension in the longitudinal and/or transverse direction by a value between 150% and elongation at break it essentially retains the acquired shape.

2. Laminate according to claim 1, characterised in that the extensibility is 250 to 400%.

3. Laminate according to claim 1 or 2, characterised in that the continuous filaments consist of a synthetic organic polymer material.

4. Laminate according to claim 3, characterised in that the continuous filaments consist of polyester, polyamide or polypropylene.

5. Laminate according to one or more of claims 1 to 4, characterised in that the foil permeable to water vapour and impermeable to water consists of polyurethane, polyolefin or a copolyether ester.

6. Laminate according to claim 5, characterised in that the foil consists of a copolyether ester which consists of a large number of recurring intralinear long-chain ester units and short-chain ester units, which are joined statistically front end-to-rear end by ester bridges, the long-chain ester units conforming to the formula 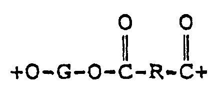 and the short-chain ester units to the formula 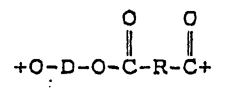 in which G is a bivalent radical formed by removal of terminal hydroxyl groups of at least one long-chain glycol which has a molecular weight in the range from 800 to 6000 and an atomic ratio of carbon to oxygen in the range from 2.0 to 4.3, at least 70% by wt. of the long-chain glycol having a carbon: oxygen ratio in the range from 2.0 to 2.4, R a bivalent radical formed by removal of carboxyl groups of at least one dicarboxylic acid with a molecular weight of less than 300, and D a bivalent radical formed by removal of hydroxyl groups of at least one diol which has a molecular weight of less than 250, at least 80 mol. % of the dicarboxylic acid used consisting of terephthalic acid or an ester-forming equivalent and at least 80 mol. % of the low-molecular diol of 1,4-butanediol or an ester-forming equivalent, the sum of the molar percentages of the dicarboxylic acid which is not terephthalic acid or its ester-forming equivalent, and the low-molecular diol which is not 1,4-butane diol or its ester-forming equivalent, being not greater than 20 and the short-chain ester units forming 50 to 75% by wt. of the copolyether ester.

7. Laminate according to one or more of claims 1 to 6, characterised in that the thickness of the foil is between 5 and 50 µm.

8. Laminate according to claim 7, characterised in that the thickness of the foil is between 10 and 25 µm.

9. Laminate according to one or more of claims 1 to 8, characterised in that thermally activatable gluing points on the foil surface facing away from the woven fabric or knitted fabric consist of an organic polymer.

10. Use of a laminate according to one or more of claims 1 to 9 for production of shoes or gloves which have an outer layer, an intermediate layer and an inner layer, the laminate serving as starting material for the intermediate layer.

11. Use according to claim 10, characterised in that the outer and inner layer consist of leather or a textile fabric independently of each other.

12. Use according to claim 10 or 11, characterised in that the foil side of the intermediate layer faces the outer layer.

13. Use according to claim 12, characterised in that the intermediate layer is joined to the outer layer by thermally activatable gluing points.

## Revendications

1. Stratifié constitué par un tissu ou un tissu à mailles et une feuille imperméable à l'eau et perméable à la vapeur d'eau, caractérisé en ce que le tissu ou le tissu à mailles est constitué par des fils continus non étirés ou partiellement étirés, en ce que le stratifié présente à la température ambiante une extensibilité longitudinale et transversale d'au moins 150 % et en ce qu'il conserve essentiellement la forme obtenue après avoir subi un allongement longitudinal et/ou transversal d'une valeur comprise entre 150 % et l'allongement à la rupture.

2. Stratifié selon la revendication 1, caractérisé en ce que l'extensibilité est comprise entre 250 et 400 %.

3. Stratifié selon la revendication 1 ou 2, caractérisé en ce que les fils continus sont constitués par une matière polymère organique synthétique.

4. Stratifié selon la revendication 3, caractérisé en ce que les fils continus sont constitués par un polyester, un polyamide ou du polypropylène.

5. Stratifié selon l'une ou plusieurs des revendications 1 à 4, caractérisé en ce que la feuille perméable à la vapeur d'eau et imperméable à l'eau est formée d'un polyuréthane, d'une polyoléfine ou d'un copolyétherester.

6. Stratifié selon la revendication 5, caractérisé en ce que la feuille est formée d'un copolyétherester qui est constitué d'un grand nombre d'unités ester à longue chaîne et d'unités ester à chaîne courte intralinéaires récurrentes, qui sont liées de façon statistique tête contre queue par des ponts ester, les unités ester à longue chaîne correspondant à la formule 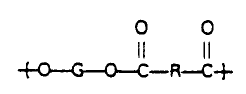 et les unités ester à chaîne courte correspondant à la formule 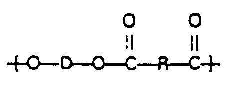 où G est un reste divalent qui se forme par élimination des groupes hydroxyle terminaux d'au moins un glycol à longue chaîne dont la masse moléculaire est comprise entre 800 et 6000 et dans lequel le rapport atomique du carbone à l'oxygène est compris entre 2,0 et 4,3, au moins 70 % en masse du glycol à longue chaîne présentant un rapport carbone:oxygène compris entre 2,0 et 2,4, R est un reste divalent qui se forme par élimination des groupes carboxyle d'au moins un acide dicarboxylique ayant une masse moléculaire inférieure à 300, et D est un reste divalent qui se forme par élimination des groupes hydroxyle d'au moins un diol dont la masse moléculaire est inférieure à 250, où au moins 80 % en moles de l'acide dicarboxylique utilisé sont constitués par de l'acide téréphtalique ou un de ses équivalents formant des esters, et au moins 80 % en moles du diol de faible masse moléculaire sont constitués par du 1,4-butanediol ou un de ses équivalents formant des esters, la somme des pourcentages en moles de l'acide dicarboxylique qui n'est pas de l'acide téréphtalique ni un de ses équivalents formant des esters et du diol de faible masse moléculaire qui n'est pas le 1,4-butanediol ni un de ses équivalents formant des esters n'étant pas supérieure à 20 et les unités ester à chaîne courte formant 50 à 75 % en masse du copolyétherester.

7. Stratifié selon l'une ou plusieurs des revendications 1 à 6, caractérisé en ce que l'épaisseur de la feuille a une valeur comprise entre 5 et 50 µm.

8. Stratifié selon la revendication 7, caractérisé en ce que l'épaisseur de la feuille a une valeur comprise entre 10 et 25 µm.

9. Stratifié selon l'une ou plusieurs des revendications 1 à 8, caractérisé en ce que, sur la surface de la feuille opposée au tissu ou au tissu à mailles, se trouvent des points de colle activables à la chaleur formés d'un polymère organique.

10. Utilisation d'un stratifié selon l'une ou plusieurs des revendications 1 à 9 pour la fabrication de chaussures ou de gants qui présentent une couche externe, une couche intermédiaire et une couche interne, le stratifié servant de matière de base pour la couche intermédiaire.

11. Utilisation selon la revendication 10, caractérisée en ce que la couche externe et la couche interne sont constituées, indépendamment l'une de l'autre, par du cuir ou un produit textile en nappe.

12. Utilisation selon la revendication 10 ou 11, caractérisée en ce que le côté de la feuille de la couche intermédiaire est tourné vers la couche externe.

13. Utilisation selon la revendication 12, caractérisée en ce que la couche intermédiaire est reliée à la couche externe par des points de colle activables à la chaleur.
